# EUROPEAN PATENT SPECIFICATION

(11) **EP 1 227 188 B1**
(45) Date of publication and mention of the grant of the patent: **08.08.2007**
(21) Application number: 02250646.3
(22) Date of filing: 30.01.2002
(51) Int. Cl.: E02D 31/02, E04B 1/68, E04D 5/10, B32B 11/00, C09J 7/02

(54) **Waterproofing system**
Wasserabdichtungssystem
Système d'imperméabilisation

(30) Priority: 30.01.2001 GB 0102350
(43) Date of publication of application: 31.07.2002
(73) Proprietor: IKO PLC, Appley Bridge Wigan Lancashire WN6 9AB (GB)
(72) Inventor: Brown, Simon Robin, Stevenage, Herts SG1 2LN (GB); George, David Brian, Hatfield, Herts AL9 5HH (GB)
(74) Representative: Johnson, Terence Leslie

(56) References cited:
- EP-A- 0 582 043
- EP-A- 0 658 656
- EP-A- 0 731 232
- EP-A- 0 810 253
- DE-A- 2 925 513
- DE-A- 10 004 948
- DE-A- 19 716 318
- GB-A- 2 070 517
- US-A- 5 143 766
- US-A- 5 496 615

## Description

The invention relates to a waterproofing component for use on floors and walls to keep ground water out of buildings, and to a waterproofing tape for use in waterproofing joints between adjacent waterproofing components.

Waterproof membranes are widely used on floors and walls to keep ground water out of buildings. Such membranes are susceptible to damage, and so cannot be laid directly on hardcore substrate, but must instead be laid on a cement screed which has been laid on the hardcore substrate. Laying such a cement screed is time-consuming as the screed must dry before the membrane can be applied.

Heat is generally lost through floors and walls of buildings. Although waterproof membranes may provide some insulation, heat is still lost through floors and walls to which waterproof membranes have been applied.

It is an object of the invention to provide a waterproofing system which reduces or eliminates these disadvantages.

Relevant prior art includes EP 0658656, DE 19716318, EP 0731232, DE 2925513, US 5143766, EP 0582043, US 5496615, GB 2070517, GB 892722 and GB 934259.

According to the present invention there is provided a waterproofing system comprising a plurality of adjacent waterproofing components each comprising a substantially rigid substantially waterproof layer and a flexible insulating layer, said respective layers being secured together by bonding, adjacent waterproofing components being butt-jointed by waterproofing tape, said waterproofing tape comprising a substantially waterproof layer bonded to a protective layer, said substantially waterproof layer being coated on its exposed side with an adhesive, adhering it to said adjacent waterproof components.

Having an insulating layer bonded to the waterproof layer means that there is no need for a cement screed to protect the waterproof layer from the hardcore substrate, and to form a surface specifically to receive the waterproof layer. The insulating layer can be applied directly onto the hardcore substrate or other rough surface where it will protect the waterproof layer from being damaged by the substrate. Having an insulating layer bonded to the waterproof layer will also reduce the loss of heat through walls and floors, and the risk of cold bridges, which can result in localised condensation on internal wall and floor surfaces. It will mean that both waterproofing and insulation will be provided in a single component.

Once a waterproof membrane has been applied, it is usually necessary to apply protection boards over the membrane before the floor slab can be cast or back-filling can commence. Laying protection boards is time-consuming. Having a waterproof layer which is also tough enough to be a protective layer means that there is no need to provide separate protection boards to protect the waterproof layer.

A substantially rigid waterproof layer will be particularly tough, and therefore suitable for use without protection boards. A particularly suitable material for such a layer is a filled polymer, especially filled polyvinyl chloride, which is both tough and waterproof.

The insulating layer may be substantially waterproof. The effectiveness of the waterproofing component will then be increased. Moreover, the insulating layer will be more effective as thermal insulation if it has low water absorption.

The insulating layer may comprise any suitable material. Examples of suitable materials are polyethylene foam, polystyrene foam, polyurethane foam and mineral fibre insulation.

The insulating layer may comprise a substantially closed cell foam, especially an expanded or extruded polystyrene foam. Closed cell foams and absorb very little water, as well as being efficient thermal insulants.

The insulating layer may have a thickness of between 6mm and 150mm, especially between 9mm and 125mm. A relatively thin section of such a foam insulating layer may suffice to accommodate roughness in a substrate.

The insulating layer may be flexible. This will help achieve reasonably complete contact between the waterproofing component and the substrate, ensuring that the former is well supported as the layer will deform to follow irregularities in the substrate.

The substantially waterproof layer may have a thickness of between 0.5mm and 6mm, especially between 1.5mm and 6mm.

The insulating layer may be coated on its exposed side with an adhesive. The adhesive may be protected by a release film. The waterproofing component may then be attached to a suitable substrate quickly without the need for additional adhesives. This is particularly useful when the component is to be installed vertically to walls. It also enables a complete bond between the component and the substrate to be achieved. This simplifies the location of leaks, should they occur.

The waterproofing component may have dimensions of 0.5m to 2m by 0.5m to 3m, especially 0.5m to 2m by 1m to 3m.

The waterproofing tape is used to waterproof butt joints between adjacent waterproofing components. It can also be used to adhere the waterproofing components to a concrete floor formed by casting wet concrete on top of the components. This will help keep the waterproofing components in contact with the floor should the hardcore substrate settle and sink. This will also help maintain the integrity of the layer of waterproofing components. The adhesive enables a strong watertight seal to the components to be achieved quickly and easily. The protective layer protects the tape from damage.

The substantially waterproof layer may comprise any suitable material.

The substantially waterproof layer may comprise a core coated with a bituminous material. The bituminous material acts as the adhesive, and so there is no need for a separate adhesive coating.

The core may comprise any suitable material, especially a plastic or polymer film, for example, polyethylene, polypropylene or polyester film, or a non-woven fibre material, for example, glass fibre fleece, polyester fibre fleece or mat, polypropylene fleece, or glass fibre reinforced polyester fleece. The bitumen coated polymer or non-woven fibre material makes the tape tough and tear resistant, and enables it to resist damage as a result of movement of the components to which it is adhered.

The protective layer may comprise any suitable material, especially a polymer, particularly a non-woven fabric polymer, for example, polyester or polypropylene matting or polypropylene or polyethylene mesh or lattice.

Two waterproofing components and a waterproofing tape embodying the invention are hereinafter described, by way of example, with reference to the accompanying drawings. Where identical features are shown, identical reference signs have been used.
Fig. 1 shows a sectional view of a prior art waterproofing system which has been installed on a hardcore substrate;
Fig. 2 shows a sectional view of a first embodiment of a waterproofing component according to the invention and a waterproofing tape according to the invention, which have been installed on a hardcore substrate;
Fig. 3 shows a sectional view of a second embodiment of a waterproofing component according to the invention and the waterproofing tape of Fig. 2, which have been installed on a hardcore substrate.

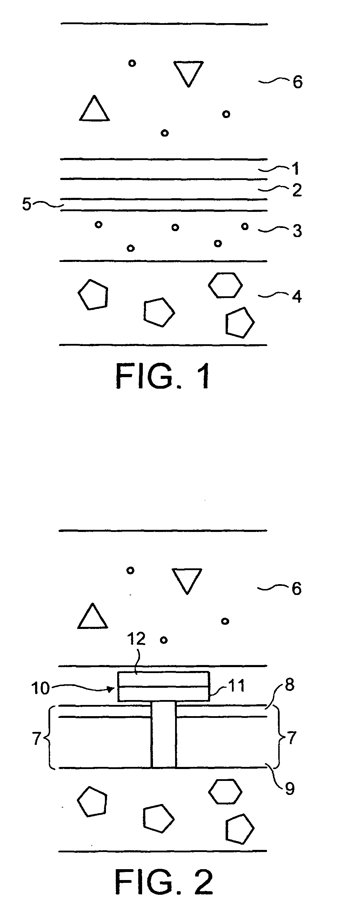

The waterproofing system shown in Fig. 1 comprises a protection board 1 and a waterproof membrane 2, which is coated on one side with an adhesive. The adhesive is a pressure sensitive adhesive which does not need activation by application of heat or water. The protection board 1 and the waterproof membrane 2 are separate, and have not been bonded together. The adhesive-coated side of the membrane 2 has been applied to a cement screed 3 which has been laid on a hardcore floor 4, and then coated with a primer 5. A protection board 1 has been laid on top of the other side of the membrane 2, and a floor slab 6 has then been cast on top of the protection board 1.

The waterproofing system of Fig. 1 is time-consuming to install as the cement screed 3 must be laid and allowed to dry before the membrane 2 can be applied, and a protection board 1 must then be laid on top of the membrane 2.

The waterproofing system shown in Fig. 2 comprises two waterproofing components 7. The waterproofing components 7 each comprise a waterproofing protective layer 8 which is bonded to an insulating layer 9.

The waterproofing layer 8 is substantially rigid, and is made from a filled polyvinyl chloride. It is 3mm thick. The insulating layer 9 is made from expanded polystyrene foam and is 80mm thick. The waterproofing components 7 each measure 1 m x 2m.

The waterproofing layer 8 and the insulating layer 9 may be bonded together by any suitable means, for example, by an adhesive.

The waterproofing system further comprises a waterproofing tape 10. The waterproofing tape 10 comprises a waterproofing layer 11 which is bonded to a protective layer 12.

The waterproofing layer 11 is made from a non-woven polyester fibre fleece core coated on both sides with a self-adhesive bitumen compound. The protective layer 12 is made from a non-woven polyester fibre mat. The waterproofing tape is 2mm thick, excluding the protective layer, and 300mm wide.

The waterproofing layer 11 and the protective layer 12 may be bonded together by any suitable means, for example, by heat and pressure.

The insulating layer 9 of each waterproofing component 7 has been applied directly to a hardcore floor 4. Waterproofing tape 10 has then been applied to the butt joints between the two adjacent waterproofing components 7, after which a floor slab 6 has been cast on top of the waterproofing layers 8 of the waterproofing components 7. The waterproofing layer 8 is tough enough to resist damage during and after installation, and so there is no need for separate protection boards 1.

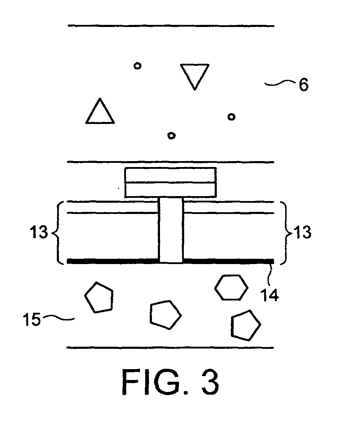

The waterproofing components 13 of Fig. 3 differ from those of Fig. 2 in that they have an adhesive 14 coated on the exposed side of the insulating layer 9. The waterproofing components have been applied to a primed concrete screed 15.

This version of the waterproofing component is especially suitable for use when the component is being applied to a relatively smooth concrete screed or to primed walls. It enables the components to be attached to the substrate quickly without the need for additional adhesives. This is particularly useful when the components are to be installed vertically to walls. It also enables a complete bond between the components and the substrate to be achieved. This simplifies the location of leaks, should they occur. The application to walls is done in the same way as the application to floors. Damp floors and walls must be primed with a water tolerant primer before application of the self adhesive components.

The waterproofing components and waterproofing tape as hereinbefore described with reference to the drawings have the following advantages:-

### Application to Floors

1. The waterproofing component can be laid directly onto compacted hardcore. There is no need to lay a cement screed on top of the hardcore.
2. No priming needed before the components are laid onto hardcore.
3. Rapid installation time even in wet site conditions; no need for specialist installation contractors.
4. The floor slab can be laid directly onto the component as soon as the latter has been installed. Time is not lost in waiting for a cement screed over the hardcore to dry, which may take 10 days prior to the application of a waterproofing membrane.
5. Insulation eliminates cold bridge to the floor slab and contributes to the thermal efficiency of the building.
6. No need to lay separate protection boards prior to casting the floor slab.
7. It is also possible to apply the waterproofing component directly onto a cement floor slab and then cast a sand cement screed at least 50mm thick onto the component. This provides protection from ground water and insulates the floor in one application.

### Application to Walls

1. Rapid board installation.
2. Can be loose laid or bonded to the outer face of an exterior wall.
3. Can be adhered to damp concrete and brick, block and masonry with appropriate moisture tolerant primer and adhesive.
4. The insulating layer eliminates the need for separate insulation and stops cold bridging.
5. Self-protecting from back fill damage.
6. Will tolerate differential movement associated with primary settlement.
7. Can also be applied within the cavity of a double skinned wall.

## Claims

1. A waterproofing system comprising a plurality of adjacent waterproofing components each comprising a substantially rigid first substantially waterproof layer (8) and a flexible insulating layer (9), said respective layers (8, 9) being secured together by bonding, adjacent waterproofing components being butt-jointed by waterproofing tape, said waterproofing tape comprising a second substantially waterproof layer (11) bonded to a protective layer (12), said second substantially waterproof layer (11) being coated on its exposed side with an adhesive, adhering it to said adjacent waterproof components.

2. A waterproofing system according to claim 1,being mounted on a substrate with said insulating layer adjacent said substrate.

3. A waterproofing system according to claim 2, said substrate being selected from the group consisting of: hardcore, relatively smooth concrete scree, and primed wall.

4. A waterproofing system according to any of the preceding claims, the insulating layer (9) being substantially waterproof.

5. A waterproofing system according to any of the preceding claims, the insulating layer (9) comprising a substantially closed cell foam.

6. A waterproofing system according to any of the preceding claims, the insulating layer (9) comprising an expanded or extruded polystyrene foam.

7. A waterproofing system according to any of the preceding claims, the insulating layer (9) having a thickness of between 6mm and 150mm.

8. A waterproofing system according to any of the preceding claims, the first substantially waterproof layer (8) comprising a filled polymer.

9. A waterproofing system according to any of the preceding claims, the first substantially waterproof layer (8) having a thickness of between 0.5mm and 6mm.

10. A waterproofing system according to any of the preceding claims, the substantially insulating layer (9) being coated on its exposed side with an adhesive.

11. A waterproofing system according to Claim 10, the adhesive being protected by a release film.

12. A waterproofing system according to any of the preceding claims, the waterproofing components having dimensions of 0.5m to 2m by 0.5m to 3m.

13. A waterproofing system according to any of the preceding claims, the second substantially waterproof layer (11) of the waterproofing tape comprising a core coated with bituminous material.

14. A waterproofing system according to Claim 13, the core comprising a plastic or polymer film.

15. A waterproofing system according to Claim 13 or Claim 14, the core comprising a non-woven fibre mat or fleece.

16. A waterproofing system according to any of the preceding claims, the protective layer (12) of the waterproofing tape comprising a polymer.

17. A waterproofing system according to Claim 16, the polymer comprising a non-woven fibre material.

## Patentansprüche

1. Wasserabdichtungssystem umfassend eine Mehrzahl von aneinander anliegenden Wasserabdichtungskomponenten, wobei jede eine im Wesentlichen steife, erste, im Wesentlichen wasserdichte Schicht (8) und eine flexible isolierende Schicht (9) umfasst, wobei die jeweiligen Schichten (8, 9) durch Verkleben aneinander befestigt sind, wobei aneinander anliegende Wasserabdichtungskomponenten durch Wasserabdichtungsband mit einer Stoßnaht verbunden sind, wobei das Wasserabdichtungsband eine zweite im Wesentlichen wasserdichte Schicht (11) umfasst, die auf eine Schutzschicht (12) aufgeklebt ist, wobei die zweite, im Wesentlichen wasserdichte Schicht (11) auf ihrer bloßgelegten Seite mit Klebstoff beschichtet ist, durch den sie an den anliegenden wasserdichten Komponenten geklebt ist.

2. Wasserabdichtungssystem nach Anspruch 1, das auf ein Substrat montiert ist, wobei die isolierende Schicht an dem Substrat anliegend ist.

3. Wasserabdichtungssystem nach Anspruch 2, wobei das Substrat aus der Gruppe ausgewählt wird bestehend aus: Kleinschlag, relativ glattem Betonfeinschutt und grundierter Wand.

4. Wasserabdichtungssystem nach einem der vorhergehenden Ansprüche, wobei die isolierende Schicht (9) im Wesentlichen wasserdicht ist.

5. Wasserabdichtungssystem nach einem der vorhergehenden Ansprüche, wobei die isolierende Schicht (9) einen im Wesentlichen geschlossenzelligen Schaumstoff umfasst.

6. Wasserabdichtungssystem nach einem der vorhergehenden Ansprüche, wobei die isolierende Schicht (9) einen expandierten oder extrudierten Polystyrolschaumstoff umfasst.

7. Wasserabdichtungssystem nach einem der vorhergehenden Ansprüche, wobei die isolierende Schicht (9) eine Dicke zwischen 6 mm und 150 mm aufweist.

8. Wasserabdichtungssystem nach einem der vorhergehenden Ansprüche, wobei die erste, im Wesentlichen wasserdichte Schicht (8) ein gefülltes Polymer umfasst.

9. Wasserabdichtungssystem nach einem der vorhergehenden Ansprüche, wobei die erste, im Wesentlichen wasserdichte Schicht (8) eine Dicke zwischen 0,5 mm und 6 mm aufweist.

10. Wasserabdichtungssystem nach einem der vorhergehenden Ansprüche, wobei die im Wesentlichen isolierende Schicht (9) auf ihrer bloßgelegten Seite mit einem Klebstoff beschichtet ist.

11. Wasserabdichtungssystem nach Anspruch 10, wobei der Klebstoff durch eine Trennfolie geschützt ist.

12. Wasserabdichtungssystem nach einem der vorhergehenden Ansprüche, wobei die Wasserabdichtungskomponenten Dimensionen von 0,5 m bis 2 m auf 0,5 m bis 3 m aufweisen.

13. Wasserabdichtungssystem nach einem der vorhergehenden Ansprüche, wobei die zweite, im Wesentlichen wasserdichte Schicht (11) des Wasserabdichtungsbands einen Kern umfasst, der mit bituminösem Material beschichtet ist.

14. Wasserabdichtungssystem nach Anspruch 13, wobei der Kern eine Kunststoff- oder Polymerfolie umfasst.

15. Wasserabdichtungssystem nach Anspruch 13 oder Anspruch 14, wobei der Kern eine nichtgewobene Fasermatte oder einen Vliesstoff umfasst.

16. Wasserabdichtungssystem nach einem der vorhergehenden Ansprüche, wobei die Schutzschicht (12) des Wasserabdichtungsbands ein Polymer umfasst.

17. Wasserabdichtungssystem nach Anspruch 16, wobei das Polymer ein nichtgewobenes Fasermaterial umfasst.

## Revendications

1. Système imperméabilisant comprenant plusieurs composants imperméabilisants adjacents comprenant chacun une première couche substantiellement imperméable (8) substantiellement rigide et une couche isolante flexible (9), lesdites couches respectives (8, 9) étant fixées ensemble par collage, les composants imperméabilisants adjacents étant joints bout à bout par une bande imperméabilisante, ledit ruban imperméabilisant comprenant une seconde couche substantiellement imperméable (11) collée sur une couche protectrice (12), ladite seconde couche substantiellement imperméable (11) étant recouverte sur sa face exposée avec an adhésif, qui la fait adhérer auxdits composants imperméables adjacents.

2. Système imperméabilisant selon la revendication 1, étant monté sur un substrat avec ladite couche isolante étant adjacente audit substrat.

3. Système imperméabilisant selon la revendication 2, ledit substrat étant sélectionné dans le groupe comprenant : une pierre concassée, une pierrée en béton relativement lisse, et un mur avec une couche de fond.

4. Système imperméabilisant selon l'une quelconque des revendications précédentes, la couche isolante (9) étant substantiellement imperméable.

5. Système imperméabilisant selon l'une quelconque des revendications précédentes, la couche isolante (9) comprenant une mousse à alvéoles substantiellement fermées.

6. Système imperméabilisant selon l'une quelconque des revendications précédentes, la couche isolante (9) comprenant une mousse de polystyrène expansé ou extrudé.

7. Système imperméabilisant selon l'une quelconque des revendications précédentes, la couche isolante (9) ayant une épaisseur entre 6 mm et 150 mm.

8. Système imperméabilisant selon l'une quelconque des revendications précédentes, la première couche substantiellement imperméable (8) comprenant un polymère chargé.

9. Système imperméabilisant selon l'une quelconque des revendications précédentes, la première couche substantiellement imperméable (8) ayant une épaisseur entre 0,5 mm et 6 mm.

10. Système imperméabilisant selon l'une quelconque des revendications précédentes, la couche substantiellement isolante (9) étant recouverte sur sa face exposée avec an adhésif.

11. Système imperméabilisant selon la revendication 10, l'adhésif étant protégé par une pellicule détachable.

12. Système imperméabilisant selon l'une quelconque des revendications précédentes, les composants imperméabilisants ayant des dimensions allant de 0,5 m à 2 m par 0,5 m à 3 m.

13. Système imperméabilisant selon l'une quelconque des revendications précédentes, la seconde couche substantiellement imperméable (11) de la bande imperméabilisante comprenant un noyau recouvert avec un matériau bitumineux.

14. Système imperméabilisant selon la revendication 13, le noyau comprenant un film plastique ou polymère.

15. Système imperméabilisant selon la revendication 13 ou 14, le noyau comprenant un mat ou une nappe en fibres non tissées.

16. Système imperméabilisant selon l'une quelconque des revendications précédentes, la couche protectrice (12) de la bande imperméabilisante comprenant un polymère.

17. Système imperméabilisant selon la revendication 16, le polymère comprenant un matériau en fibre non tissée.
